# EUROPÄISCHE PATENTSCHRIFT

(11) **EP 3 821 627 B1**
(45) Veröffentlichungstag und Bekanntmachung des Hinweises auf die Patenterteilung: **04.08.2021**
(21) Anmeldenummer: 20707252.1
(22) Anmeldetag: 26.02.2020
(51) Int. Cl.: H04W 4/44, H04W 12/02, G07C 5/00, H04L 29/08, H04W 4/40, H04W 4/50

(54) **VERFAHREN ZUM KONTROLLIEREN EINES DATENAUSTAUSCHS ZWISCHEN EINER STEUEREINRICHTUNG EINES KRAFTFAHRZEUGS UND EINER EXTERNEN EINRICHTUNG, STEUEREINRICHTUNG FÜR EIN KRAFTFAHRZEUG SOWIE KRAFTFAHRZEUG MIT EINER DERARTIGEN STEUEREINRICHTUNG**
METHOD FOR CONTROLLING A DATA INTERCHANGE BETWEEN A CONTROL DEVICE OF A MOTOR VEHICLE AND AN EXTERNAL DEVICE, CONTROL DEVICE FOR A MOTOR VEHICLE AND MOTOR VEHICLE HAVING SUCH A CONTROL DEVICE
PROCÉDÉ POUR CONTRÔLER UN ÉCHANGE DE DONNÉES ENTRE UN DISPOSITIF DE COMMANDE D'UN VÉHICULE AUTOMOBILE ET UN DISPOSITIF EXTERNE, DISPOSITIF DE COMMANDE POUR UN VÉHICULE AUTOMOBILE AINSI QUE VÉHICULE AUTOMOBILE DOTÉ D'UN TEL DISPOSITIF DE COMMANDE

(30) Priorität: 06.03.2019 DE 102019203011
(43) Veröffentlichungstag der Anmeldung: 19.05.2021
(73) Patentinhaber: AUDI AG, 85045 Ingolstadt (DE)
(72) Erfinder: WILLMANN, Konstantin, 85053 Ingolstadt (DE)
(86) Internationale Anmeldenummer: PCT/EP2020/054962
(87) Internationale Veröffentlichungsnummer: WO 2020/178087

(56) Entgegenhaltungen:
- US-A1- 2004 267 410
- MADE WIRAWAN I ET AL: "IoT Communication System Using Publish-Subscribe", 2018 INTERNATIONAL SEMINAR ON APPLICATION FOR TECHNOLOGY OF INFORMATION AND COMMUNICATION, IEEE, 21. September 2018 (2018-09-21), Seiten 61-65, XP033459358, DOI: 10.1109/ISEMANTIC.2018.8549814 [gefunden am 2018-11-27]

## Beschreibung

Die Erfindung betrifft ein Verfahren zum Kontrollieren eines Datenaustauschs zwischen einer Steuereinrichtung eines Kraftfahrzeugs und einer externen Einrichtung, eine Steuereinrichtung für ein Kraftfahrzeug, die dazu ausgelegt ist, ein derartiges Verfahren durchzuführen, sowie ein Kraftfahrzeug mit einer derartigen Steuereinrichtung.

Aufgrund von bestehenden Regeln zur Verarbeitung personenbezogener Daten durch private Unternehmen oder öffentliche Einrichtungen, wie sie beispielsweise durch die Datenschutz-Grundverordnung (DSGVO) der Europäischen Union vorgegeben sind, ergibt sich im Zusammenhang mit Fahrzeugfunktionen von Kraftfahrzeugen, deren Durchführung einen Datenaustausch des Kraftfahrzeugs mit einer externen Einrichtung umfasst und die oftmals als Onlinedienste bezeichnet werden, die Frage, wie sichergestellt werden kann, dass diese Regeln befolgt werden und in dem Kraftfahrzeug nur dann Daten mit der externen Einrichtung ausgetauscht werden, wenn ein Benutzer des Kraftfahrzeugs dies wünscht und erlaubt.

Die US 2015/0333787 A1 zeigt ein Verfahren sowie ein System, mit denen Onlinedienste durchgeführt werden können. Hierbei wird eine Anfrage für einen Onlinedienst mittels einer mobilen Kommunikationseinrichtung, die mit einem fahrzeugbasierten System verbunden ist, ausgesendet. Der entsprechende Inhalt wird von dem fahrzeugseitigen System empfangen. Besonders relevant ist hierbei, dass der Zugang von Onlinediensten zum fahrzeugseitigen System von einer Fähigkeit und Vereinbarkeit des Fahrzeugs mit derartigen Onlinediensten abhängt.

In der US 2011/0288724 A1 sind eine Vorrichtung und ein Verfahren beschrieben, die der Autorisierung von einem Onlinedienst während einer Fahrt eines Kraftfahrzeugs dienen. Hierbei wird immer dann, wenn eine Nachricht oder eine Anfrage für einen Download von dem Onlinedienst an das Kraftfahrzeug gesendet wird, der Fahrzustand des Kraftfahrzeugs überprüft.

US 2004/267410 A1 legt ein Verfahren zur Erhöhung der Privatsphäre bei der Übertragung von telematischen Daten offen.

Made Wirawan, I. Dwi Wahyono, G. Idfi and G. Radityo Kusumo, "loT Communication System Using Publish-Subscribe," 2018 International Seminar on Application for Technology of Information and Communication, Semarang, Indonesia, 2018, pp. 61-65, doi: 0.1109/ISEMANTIC.2018.8549814 legt die Deaktivierung von Publishern in einem Pub/Sub-System offen.

Hierbei wird jedoch nicht berücksichtigt, dass jeder Onlinefunktion, die im Folgenden als Fahrzeugfunktion bezeichnet wird, jeweils einer oder mehrere Subdienste zugeordnet sind, auf deren Grundlage die jeweilige Fahrzeugfunktion durchgeführt wird. Durch einen jeweiligen Subdienst erfolgt ein Datenaustausch zwischen einer Steuereinrichtung des Kraftfahrzeugs und einer externen Einrichtung selbstständig und unabhängig davon, ob die Fahrzeugfunktion aktuell aktiviert oder deaktiviert ist. Aufgrund eines aktivierten Subdiensts kommt es beispielsweise sogar dann, wenn eine Fahrzeugfunktion momentan nicht angesteuert wird, zu einer entsprechenden Datenerhebung sowie einer Datenübermittlung von dem Kraftfahrzeug an die externe Einrichtung. Eine solche Aktivität eines Subdienstes bei inaktiver Fahrzeugfunktion ist jedoch zum Beispiel gemäß der DSGVO nicht zulässig und sollte unterbunden werden.

Es ist die Aufgabe der Erfindung, eine Lösung bereitzustellen, mit der ein Datenaustausch zwischen einer Steuereinrichtung eines Kraftfahrzeugs und einer externen Einrichtung kontrolliert werden kann.

Diese Aufgabe wird durch die Gegenstände der unabhängigen Patentansprüche gelöst. Vorteilhafte Ausgestaltungen mit zweckmäßigen und nichttrivialen Weiterbildungen der Erfindung sind in den abhängigen Ansprüchen, der folgenden Beschreibung und den Figuren angegeben.

Erfindungsgemäß wird ein Verfahren zum Kontrollieren eines Datenaustauschs zwischen einer Steuereinrichtung eines Kraftfahrzeugs und einer externen Einrichtung vorgeschlagen. Diese externe Einrichtung kann in Form einer externen Servereinrichtung ausgebildet sein, über die beispielsweise von einem mobilen Endgerät eines Benutzers ausgesendete Benutzerwünsche für die Steuereinrichtung des Kraftfahrzeugs bereitgestellt werden können. Mittels der Steuereinrichtung können mehrere Fahrzeugfunktionen durchgeführt werden, wie beispielsweise eine ferngesteuerte Steuerung einer Türschließanlage des Kraftfahrzeugs, eine per Fernsteuerung ein- und ausschaltbare Fahrzeugheizung, oder eine im Kraftfahrzeug erfolgte Anfrage aktueller Wetterdaten unter Berücksichtigung eines aktuellen Fahrzeugstandorts des Kraftfahrzeugs. Jeder dieser Fahrzeugfunktion ist zumindest ein für eine Nutzung durch mehrere Fahrzeugfunktionen bereitgestellter Subdienst zugeordnet. Im Kraftfahrzeug sind also mehrere Subdienste vorgesehen, wie beispielsweise ein Türstatusmelder, ein Auftragsanfragedienst, der dazu eingerichtet ist, bei der externen Einrichtung anzufragen, ob dieser ein ferngesteuerter Befehl für das Kraftfahrzeug vorliegt, ein Authentifizierungsdienst, der dazu eingerichtet ist, zu überprüfen, ob eine Kommunikationsverbindung zwischen der externen Einrichtung und dem Kraftfahrzeug zugelassen ist, oder ein Statusdatenübertragungsdienst, der beispielsweise dazu eingerichtet ist, eine aktuelle Position des Kraftfahrzeugs sowie weiter Fahrzeugparameter, wie zum Beispiel einen Stand einer Tankfüllung, einen Ladezustand einer Batterie oder eine Temperatur eines Fahrzeuginnenraums, von entsprechenden Sensoreinrichtungen des Kraftfahrzeugs anzufragen und an die externe Einrichtung zu übertragen.

Auf Grundlage des zumindest einen der Fahrzeugfunktion zugeordneten Subdienstes wird die entsprechende Fahrzeugfunktion durchgeführt. Außerdem erfolgt durch diesen Subdienst der Datenaustausch zwischen der Steuereinrichtung und der externen Einrichtung selbstständig und unabhängig davon, ob die Fahrzeugfunktion aktuell aktiviert oder deaktiviert ist. Der jeweilige Subdienst ist also dazu ausgelegt, nachdem er einmal aktiviert wurde, beispielsweise kontinuierlich oder in bestimmten Zeitabständen zum Beispiel von ihm erhobene Daten an die externe Einrichtung zu übermitteln. Ist als Fahrzeugfunktion zum Beispiel vom Benutzer des Kraftfahrzeugs eine ferngesteuerte Öffnung der Türschließanlage des Kraftfahrzeugs aktiviert worden, sind beispielsweise als Subdienste der Türstatusmelder, der Authentifizierungsdienst sowie der Auftragsanfragedienst aktiviert.

Das Verfahren zum Kontrollieren des Datenaustauschs zwischen der Steuereinrichtung des Kraftfahrzeugs und der externen Einrichtung umfasst nun die folgenden Schritte: Falls die Steuereinrichtung für zumindest eine der Fahrzeugfunktionen ein Deaktivierungssignal empfängt, deaktiviert die Steuereinrichtung diese zumindest eine Fahrzeugfunktion. Meldet beispielsweise die externe Einrichtung, dass der Benutzer des Kraftfahrzeugs, nachdem dieser den Status der Türschließanlage des Kraftfahrzeugs mithilfe einer entsprechenden Anfrage mittels eines Mobiltelefons überprüft hat, dass der Benutzer die entsprechende Applikation auf seinem Mobiltelefon wieder geschlossen hat und folglich keinen ferngesteuerten Zugriff auf die Türschließanlage mehr wünscht, wird das Deaktivierungssignal bereitgestellt. Das Deaktivierungssignal wird beispielsweise auf Anfrage des Auftragsanfragedienstes von der externen Einrichtung an das Kraftfahrzeug übermittelt.

Nachdem die Fahrzeugfunktion, die, wie in diesem Beispiel angenommen, einen ferngesteuerten Zugriff auf die Türschließanlage ermöglicht, deaktiviert ist, wird in einem nächsten Schritt überprüft, ob der zumindest eine Subdienst, der der aktivierten Fahrzeugfunktion zugeordnet ist, zumindest einer anderen Fahrzeugfunktion, die aktuell aktiviert ist, zugeordnet ist. Beispielsweise wird überprüft, ob es eine weitere, momentan aktive Fahrzeugfunktion im Kraftfahrzeug gibt, die ebenfalls auf den Auftragsanfragedienst zugreifen möchte. Ist nun beispielsweise zeitgleich die per Fernsteuerung ein- und ausschaltbare Fahrzeugheizung aktiviert, wird der Auftragsanfragedienst weiterhin von dieser Funktion benötigt, sodass dieser Subdienst weiterhin aktiviert bleiben sollte. Demgegenüber wird der Türstatusmelder von der weiterhin aktiven per Fernsteuerung ein- und ausschaltbare Fahrzeugheizung nicht weiter benötigt. Dieser Subdienst wird daher von keiner aktuell aktivierten Fahrzeugfunktion weiter benötigt, da er keiner aktuell aktivierten Fahrzeugfunktion zugeordnet ist.

Falls der zumindest eine Subdienst keiner aktuell aktivierten Fahrzeugfunktion zugeordnet ist, deaktiviert die Steuereinrichtung diesen zumindest einen Subdienst und beendet dadurch den durch den zumindest einen Subdienst erfolgten Datenaustausch zwischen der Steuereinrichtung und der externen Einrichtung. In diesem Beispiel würde also die Steuereinrichtung erkennen, dass der Türstatusmelder nicht weiter von einer aktiven Fahrzeugfunktion benötigt wird und beendet daraufhin diesen Subdienst, indem sie ihn deaktiviert und dadurch verhindert, dass es zu einer weiteren Meldung des Türstatus an die externe Einrichtung kommt. Hierdurch wird unterbunden, dass dieser aktuell keine Rechtsgrundlage mehr aufweisende Datenaustausch weiterhin stattfindet.

Das erfindungsgemäße Verfahren umfasst hierbei sowohl Fahrzeugfunktionen, die per Fernsteuerung angesteuert werden, als auch Fahrzeugfunktionen des Kraftfahrzeugs, die im Kraftfahrzeug selbst angesteuert und genutzt werden und Daten zwischen dem Kraftfahrzeug und der externen Einrichtung austauschen, wozu zunächst beispielsweise Daten erhoben werden müssen.

Hierdurch ergibt sich der Vorteil, dass das Sendeverhalten, das heißt der Datenaustausch zwischen der Steuereinrichtung und der externen Einrichtung, bedarfsabhängig gesteuert und dadurch letztendlich kontrolliert werden kann. Denn hierdurch wird unterbunden, dass die externe Einrichtung beispielsweise eine Zustandsdatenerfassung vornehmen kann, die zur Ausführung der aktuell aktiven Fahrzeugfunktion nicht nötig ist und außerdem womöglich nicht vom Benutzer des Kraftfahrzeugs gewünscht wird. Zusätzlich beispielsweise zu dem aktiv vom Benutzer auf seinem mobilen Endgerät angegebenen Wunsch, dass die Deaktivierung einer fernsteuerbaren Fahrzeugfunktion erfolgen soll, wird nun sichergestellt, dass die diversen Subdienste, die der Benutzer oftmals nicht direkt angezeigt bekommt und über deren Details und Vorhandensein er sich gegebenenfalls nicht bewusst ist, ebenfalls abgeschaltet werden. Dies bewirkt, dass zu einem beliebigen Zeitpunkt stets nur die Fahrzeugfunktionen sowie die entsprechenden Subdienste aktiviert sind, die aktiv sein müssen, um aktuell gewünschte Fahrzeugfunktionen ausführen zu können und die folglich eine entsprechende Rechtsgrundlage aufweisen. Letztendlich ermöglicht das erfindungsgemäße Verfahren somit ein vorteilhaftes Kontrollieren jeglicher Datenbeschaffung der externen Einrichtung von der fahrzeugseitigen Steuereinrichtung.

Zur Erfindung gehören auch Ausführungsformen, durch die sich zusätzliche Vorteile ergeben.

In einer vorteilhaften Ausführungsform des erfindungsgemäßen Verfahrens ist es vorgesehen, dass, falls die Steuereinrichtung für zumindest eine der Fahrzeugfunktionen ein Aktivierungssignal empfängt, die Steuereinrichtung diese zumindest eine Fahrzeugfunktion aktiviert. Besteht beispielsweise der Benutzerwunsch des Benutzers des Kraftfahrzeugs darin, die per Fernsteuerung ein- und ausschaltbare Fahrzeugheizung zu aktivieren, wird ein entsprechendes Signal in Form des Aktivierungssignals von der externen Einrichtung an die Steuereinrichtung übermittelt, woraufhin die entsprechende Fahrzeugfunktion im Kraftfahrzeug aktiviert wird. Außerdem wird überprüft, ob der zumindest eine der Fahrzeugfunktion zugeordnete Subdienst bereits aktiviert ist, wobei, falls der zumindest eine der aktivierten Fahrzeugfunktion zugeordnete Subdienst aktuell deaktiviert ist, der zumindest eine Subdienst aktiviert und dadurch der durch den zumindest einen Subdienst erfolgte Datenaustausch zwischen der Steuereinrichtung und der externen Einrichtung gestartet wird.

Die Steuereinrichtung wird also, nachdem die Aktivierung der per Fernsteuerung ein- und ausschaltbare Fahrzeugheizung erfolgte, zunächst überprüfen, ob alle für diese Fahrzeugfunktion benötigten Subdienste bereits aktiviert sind. Sind nun beispielsweise der hierfür benötigte Auftragsanfragedienst sowie der Subdienst zur Authentifizierung der Kommunikationsverbindung zwischen der Steuereinrichtung und der externen Einrichtung bereits aktiv, da beispielsweise der Benutzer zusätzlich zu seiner Anfrage betreffend die Einstellung der Fahrzeugheizung eine Abfrage des Zustands der Türschließanlage übermittelt hat, müssen diese beiden genannten Subdienste nicht mehr aktiviert werden, da sie bereits in einem aktivierten Zustand sind. Ein Heizungsstatusmelder, der beispielsweise eine aktuelle Temperatur der Fahrzeugsitze an die externe Einrichtung übermittelt, ist jedoch bisher inaktiv, das heißt wird aktuell von keiner anderen Fahrzeugfunktion benötigt. Nachdem das Aktivierungssignal von der Steuereinrichtung empfangen wurde, wird die Steuereinrichtung diesen Subdienst, das heißt beispielsweise den Subdienst Heizungsstatusmelder, aktivieren, sodass dieser Subdienst von nun an entsprechende Statusmeldungen an die externe Einrichtung aussendet.

Hierdurch wird sichergestellt, dass, wenn eine Fahrzeugfunktion aktiviert ist, alle dieser Fahrzeugfunktion zugewiesenen Subdienste aktiviert sind oder werden, sodass die Ausführung der aktivierten Fahrzeugfunktion ermöglicht ist. Jeder Subdienst, der zumindest zu einem aktuellen Zeitpunkt eine Rechtsgrundlage aufweist, wird also aktiviert, wohingegen jeder Subdienst, der von keiner aktiven Fahrzeugfunktion mehr benötigt wird, deaktiviert wird. Hierdurch wird letztendlich ein bedarfsgerechtes Aktivieren der Datenbeschaffung der externen Einrichtung von der Steuereinrichtung des Kraftfahrzeugs ermöglicht. Hierdurch wird in vorteilhafter Weise zu jedem Zeitpunkt die volle Funktionsfähigkeit der Fahrzeugfunktionen mit Unterstützung durch die benötigten Subdienste gewährleistet.

In einer weiteren vorteilhaften Ausgestaltungsform der Erfindung ist es vorgesehen, dass das Deaktivierungssignal oder das Aktivierungssignal für zumindest eine Fahrzeugfunktion durch eine Eingabe eines Benutzers des Kraftfahrzeugs auf einer Bedieneinrichtung im Kraftfahrzeug erzeugt und fahrzeugintern an die Steuereinrichtung übermittelt wird. Im Kraftfahrzeug kann also eine Mensch-Maschine-Schnittstelle, wie zum Beispiel ein Touchscreen oder eine Anzeigeeinrichtung mit jeweiligen Tasten und/oder Dreh-Schaltern, vorgesehen sein, wobei bei einer Betätigung eines Betätigungselements dieser Bedieneinrichtung die Fahrzeugfunktion deaktiviert oder aktiviert wird. Beispielsweise kann der Benutzer eine Wettervorhersageanzeige für einen aktuellen Fahrzeugstandort aufrufen, woraufhin mittels entsprechender Subdienste der aktuelle Fahrzeugstandort an die externe Einrichtung übermittelt wird und entsprechende Wettervorhersagedaten von der externen Einrichtung empfangen werden. Ein analoger Datenaustausch mit der externen Einrichtung wird aktiviert oder deaktiviert, wenn auf einen Benutzerwunsch hin aktuelle Nachrichten im Kraftfahrzeug angezeigt werden. Alternativ oder zusätzlich dazu kann eine Fahrzeugfunktion, deren Durchführung einen Datenaustausch mit der externen Einrichtung umfasst, unabhängig von einer Eingabe des Benutzers aktiviert und/oder deaktiviert werden. Dies ist zum Beispiel der Fall, wenn ein Navigationssystem des Kraftfahrzeugs für eine Routenplanung und/oder Kartenanzeige aktuelle Verkehrsflussdaten von der externen Einrichtung abruft. Diese Fahrzeugfunktion aktiviert der Benutzer des Kraftfahrzeugs nicht immer aktiv, sondern kann im Rahmen eines aktivierten Navigationssystems automatisch aktiviert werden. Bei derartig aktivierten oder deaktivierten Fahrzeugfunktionen wird also sichergestellt, dass im Kraftfahrzeug kein Subdienst aktiviert ist, ohne dass dieser für eine aktivierte Fahrzeugfunktion benötigt wird.

Alternativ oder zusätzlich zur Erzeugung des Deaktivierungssignals oder Aktivierungssignals für die zumindest eine Fahrzeugfunktion durch eine Eingabe des Benutzers des Kraftfahrzeugs auf der Bedieneinrichtung im Kraftfahrzeug, ist eine derartige Erzeugung durch eine Eingabe des Benutzers auf einem mobilen Endgerät vorgesehen, wobei die Übermittlung des erzeugten Deaktivierungssignals oder Aktivierungssignals über die externe Einrichtung an die Steuereinrichtung des Kraftfahrzeugs erfolgt. Der Benutzer hat also die Möglichkeit, bei einer entsprechenden Eingabe, beispielsweise mittels einer Berührung eines berührungsempfindlichen Displays eines Mobiltelefons unter Verwendung einer dafür ausgelegten Applikation, die fernsteuerbare Fahrzeugfunktion anzusteuern, wobei er bei einem ersten Aufrufen sowie bei einem Beenden der jeweiligen Eingabe veranlasst, dass das Aktivierungssignal beziehungsweise das Deaktivierungssignal übermittelt wird.

Die Eingabe des Benutzers wird jedoch als entsprechendes Steuersignal nicht direkt von der mobilen Einrichtung des Benutzers an die Steuereinrichtung beziehungsweise an die Kommunikationseinrichtung der Steuereinrichtung des Kraftfahrzeugs übermittelt, sondern wird zunächst nur der externen Einrichtung bereitgestellt. Die Kommunikation hinsichtlich der Fahrzeugfunktion erfolgt somit stets über die externe Einrichtung, die zumindest als Übermittlerin entsprechender Steuersignale, dem Deaktivierungssignal oder dem Ansteuerungssignal, dient. Hierdurch wird es möglich, dass der Datenaustausch der Steuereinrichtung des Kraftfahrzeugs mit der externen Einrichtung in vorteilhafter Weise mit dem erfindungsgemäßen Verfahren kontrolliert werden kann, ohne dass der Datenaustausch zwischen dem mobilen Endgerät des Benutzers und der externen Einrichtung eingeschränkt werden muss, da jegliche Weitergabe von im Kraftfahrzeug erhobenen Statusdaten oder anderen Daten bereits durch eine entsprechende Überprüfung der verschiedenen Subdienste der Fahrzeugfunktionen in der Steuereinrichtung selbst erfolgt. Die Überprüfung, ob bestehende Regelungen hinsichtlich der Verarbeitung personenbezogener Daten betreffend die vom Kraftfahrzeug erhobenen Daten eingehalten werden, sind somit unabhängig von Einstellungen und deren Umsetzungen im mobilen Endgerät des Benutzers durch das beschriebene Vorgehen in der Steuereinrichtung des Kraftfahrzeugs durchsetzbar.

Eine besonders vorteilhafte Ausgestaltungsform der Erfindung sieht vor, dass der Steuereinrichtung Eingaben des Benutzers auf dem mobilen Endgerät, die an die externe Einrichtung übermittelt werden, nur auf Anfrage der Steuereinrichtung bei der externen Einrichtung übermittelt werden. Es ist also nicht vorgesehen, dass beispielsweise in vorgegebenen Zeitintervallen oder zu beliebigen Zeitpunkten, wenn von dem mobilen Endgerät aus Daten an die externe Einrichtung übermittelt werden, diese direkt an die Steuereinrichtung des Kraftfahrzeugs übermittelt werden. Vielmehr informiert die externe Einrichtung lediglich mit einer Nachricht das Kraftfahrzeug, dass gegebenenfalls für dieses zumindest eine Anfrage und/oder ein Auftrag vorliegt. Daraufhin wird beispielsweise mithilfe des Auftragsanfragedienstes des Kraftfahrzeugs von der externen Einrichtung die dort für das Kraftfahrzeug hinterlegte zumindest eine Anfragen und/oder der zumindest eine Auftrag abgerufen. Hierdurch kann beispielsweise die Wahrscheinlichkeit eines ungewünschten, nicht autorisierten Zugriffs und vor allem einer damit verbundenen nicht zugelassenen und nicht gewünschten Abfrage von von den Subdiensten erfassten Daten verhindert werden, da jegliche aus der Ferne übermittelte Fahrzeugfunktionssignale immer nur dann der Steuereinrichtung bereitgestellt werden, wenn diese derartige Steuersignale abfragt.

Des Weiteren sieht eine Ausgestaltungsform der Erfindung vor, dass das Deaktivierungssignal und/oder das Aktivierungssignal für die zumindest eine Fahrzeugfunktion von der externen Einrichtung oder einer weiteren externen Einrichtung erzeugt wird und über die externe Einrichtung an die Steuereinrichtung übermittelt wird. Zusätzlich oder alternativ zu einer Eingabe eines Benutzers des Kraftfahrzeugs auf der Bedieneinrichtung im Kraftfahrzeug und/oder auf dessen mobilen Endgerät ist es also möglich, dass die externe Einrichtung selbst oder eine weitere externe Einrichtung eine der Fahrzeugfunktionen des Kraftfahrzeugs aufruft. In diesem Zusammenhang ist es beispielsweise möglich, dass beispielsweise auf Wunsch des Fahrzeugherstellers über eine weitere externe Servereinrichtung des Fahrzeugherstellers eine Anfrage nach vom Kraftfahrzeug intern erhebbaren Daten übermittelt wird, beispielsweise um hinsichtlich einer Produktverbesserung entsprechende Daten zu analysieren.

Es kann beispielsweise zur Optimierung einer Schiebedachsteuerung des Kraftfahrzeugs sinnvoll für einen Fahrzeughersteller sein, Daten von einem Kraftfahrzeug anzufragen, die umfassen, wann und in welchem Ausmaß eine automatische Schiebedachöffnungsfunktion von dem Benutzer des Kraftfahrzeugs genutzt wird. Entsprechende Daten können beispielsweise in der Steuereinrichtung hinterlegt sein und könnten mit einem Subdienst, der beispielsweise dazu ausgelegt ist, Fahrzeugzustandsdaten an die externe Einrichtung zu übermitteln, über die externe Einrichtung einer weiteren Servereinrichtung des Fahrzeugherstellers bereitgestellt werden. Hierbei kann es insbesondere vorgesehen sein, dass derartige Daten nur unter Berücksichtigung einer entsprechenden Freigabe des Benutzers des Kraftfahrzeugs erhoben und/oder weitergegeben werden. Dem Benutzer des Kraftfahrzeugs steht es somit frei, eine derartige Datensammlung, beispielsweise vom Fahrzeughersteller des Kraftfahrzeugs, zu erlauben, indem er dieser zustimmt. Hierdurch wird es in vorteilhafter Weise möglich, dass trotz Berücksichtigung von bestehenden Regeln zur Verarbeitung personenbezogener Daten durch private Unternehmen im Falle einer entsprechenden Berechtigung, das heißt im Falle einer entsprechenden Freigabe durch den Benutzer des Kraftfahrzeugs, dennoch beispielsweise zur Produktverbesserung benötigte Daten erhoben und vom Kraftfahrzeug an die externe Einrichtung übermittelt werden können. Auch ohne Deaktivierung und Aktivierung einer vom Benutzer gewünschten Fahrzeugfunktion durch den Benutzer selbst können somit Zustandsdaten des Kraftfahrzeugs zur externen Einrichtung weitergeleitet werden. Alternativ oder zusätzlich zu der genannten Verwendung der Daten durch den Fahrzeughersteller zur Produktverbesserung sind auch andere Datensammeldienste denkbar, die beispielsweise für die Optimierung von Navigationssystemen häufig befahrene Straßenrouten auswerten.

In einer besonders vorteilhaften Ausgestaltungsform der Erfindung ist es vorgesehen, dass in der Steuereinrichtung eine Verknüpfung zwischen jeder Fahrzeugfunktion und dem jeweiligen zumindest einen Subdienst hinterlegt ist. Jeder Fahrzeugfunktion ist folglich eine hinterlegte Anzahl von ihn unterstützenden Subdiensten zugewiesen. Diese Verknüpfungen können beispielsweise in einer Datenbank hinterlegt sein, in der zu jeder Fahrzeugfunktion alle dieser Fahrzeugfunktion zugeordneten Subdienste aufgelistet sind. Die Steuereinrichtung überprüft nun auf Basis der hinterlegten Verknüpfung, ob der zumindest eine Subdienst, der der deaktivierten Fahrzeugfunktion zugeordnet ist, zumindest einer anderen Fahrzeugfunktion, die aktuell aktiviert ist, zugeordnet ist. Insbesondere überprüft die Steuereinrichtung auf Basis der hinterlegten Verknüpfung, ob der zumindest eine der Fahrzeugfunktion zugeordnete Subdienst bereits aktiviert ist.

Im Fall eines Deaktivierungssignals oder eines Aktivierungssignals, das von der Steuereinrichtung betreffend einer der Fahrzeugfunktion empfangen wird, erfolgen die bereits oben beschriebenen Überprüfungsschritte, indem zunächst ein Abgleichen mit der Datenbank erfolgt, in der die Verknüpfung zwischen jeder Fahrzeugfunktion und dem jeweiligen zumindest einen Subdienst hinterlegt ist. Hierdurch ist in der Steuereinrichtung zum einen hinterlegt, wie die verschiedenen Subdienste mit den Fahrzeugfunktionen in Zusammenhang stehen. Zum anderen kann mithilfe dieser Datenbank auch transparent nachvollzogen werden, welche Subdienste bei welchen aktivierten Fahrzeugfunktionen tatsächlich aktiviert sein müssen und welche, da ihnen die Rechtsgrundlage für ihren aktivierten Zustand fehlt, deaktiviert werden sollten. Hierdurch kann in besonders kurzer Zeit sowie sehr zuverlässig der Datenaustausch zwischen der Steuereinrichtung und der externen Einrichtung kontrolliert werden, da eine Zuordnung der Subdienste zu den einzelnen Fahrzeugfunktionen eindeutig hinterlegt und zudem schnell abrufbar ist.

Eine zusätzliche Ausgestaltungsform der Erfindung sieht vor, dass dem Benutzer des Kraftfahrzeugs die hinterlegte Verknüpfung zwischen jeder Fahrzeugfunktion mit dem jeweiligen zumindest einen Subdienst auf einer Anzeigeeinrichtung des Kraftfahrzeugs und/oder dem mobilen Endgerät des Benutzers auf eine entsprechende Anfrage des Nutzers hin angezeigt wird. Der Benutzer hat also die Möglichkeit, sich beispielsweise durch Aktivieren einer Anzeigefunktion mittels einer Bedieneinrichtung des Kraftfahrzeugs auf eine Anzeigeeinrichtung des Kraftfahrzeugs, zum Beispiel einem Display in einer Mittelkonsole des Kraftfahrzeugs, die einzelnen Fahrzeugfunktionen und die mit ihnen verbundenen Subdienste anzeigen zu lassen. Hierbei ist es außerdem möglich, dass ein aktueller Aktivierungszustand der jeweiligen Fahrzeugfunktion sowie der jeweiligen Subdienste angezeigt wird.

Zusätzlich oder alternativ dazu kann sich der Benutzer diese Informationen auch auf einem mobilen Endgerät, beispielsweise in der zur Fernsteuerung der Fahrzeugfunktion benötigten Applikation auf dem mobilen Endgerät, anzeigen lassen. Hierbei ist es besonders vorteilhaft, dass derartige Informationsanzeigen nur auf eine entsprechende Anfrage des Benutzers hin angezeigt werden, die er beispielsweise durch eine entsprechende Auswahl in einer Menüfunktion des gewählten Anzeigegeräts aktiv auswählen kann. Hierdurch wird vorteilhaft eine Transparenz der Verkettung zwischen Fahrzeugfunktion und Subdiensten darstellbar, wodurch eine optimale Transparenz für den Nutzer des Kraftfahrzeugs gewährleistet werden kann. Ein nicht an den genannten Informationen interessierter Benutzer wird jedoch mit diesen Informationen nicht ungewünscht konfrontiert und gegebenenfalls gelangweilt.

In einer weiteren Ausgestaltungsform der Erfindung ist es vorgesehen, dass der Subdienst jeweils Statusdaten des Kraftfahrzeugs und/oder einer Kommunikationsverbindung zwischen der Steuereinrichtung des Kraftfahrzeugs und der externen Einrichtung beschafft, zumindest für eine vorgegebene Zeit lang speichert und an die externe Einrichtung aussendet. Die einzelnen Subdienste haben somit zumindest gemein, dass sie das Fahrzeug betreffende Daten erheben können, beispielsweise indem sie entsprechende Daten von Sensoreinrichtungen des Kraftfahrzeugs anfragen. Diese Daten werden daraufhin zumindest temporär in der Steuereinrichtung hinterlegen und in Form des Datenaustauschs mit der externen Einrichtung geteilt. Die Statusdaten umfassen beispielsweise eine aktuelle Fahrzeugposition, das heißt die per globalem Positionsbestimmungssystem (GPS) bestimmte aktuelle Standposition des Fahrzeugs, einen Türschlosszustand der einzelnen Türen und/oder des Kofferraums des Kraftfahrzeugs, ein Sicherheitszertifikat der Kommunikationsverbindung zwischen der externen Einrichtung und der Steuereinrichtung, eine aktuelle Temperatur eines Sitzes des Kraftfahrzeugs, Informationen zu einem aktuellen Sicherheitsupdate der verschlüsselten Kommunikationsverbindung zwischen der externen Einrichtung und der Steuereinrichtung, eine Zeitstelluhrfunktion, die ermöglicht, bestimmte Fahrzeugfunktionen zu einem bestimmten vorgegebenen Zeitpunkt zu starten, einen aktuellen Tankstand eines Kraftstofftanks oder einen Ladezustand einer Batterie des Kraftfahrzeugs. Die den jeweiligen Subdiensten vorliegenden Statusdaten des Kraftfahrzeugs oder der Kommunikationsverbindung dienen jedoch nicht lediglich einem internen Datenaustauch innerhalb des Kraftfahrzeugs, sondern werden an die externe Einrichtung übermittelt. Die Subdienste ermöglichen somit in vorteilhafter Weise den Datenaustausch mit der externen Einrichtung, der benötigt wird, um die Fahrzeugfunktion tatsächlich im Kraftfahrzeug durchführen zu können.

Die Erfindung betrifft des Weiteren eine Steuereinrichtung für ein Kraftfahrzeug, die dazu ausgelegt ist, einen Datenaustausch zwischen der Steuereinrichtung und einer externen Einrichtung zu kontrollieren, wenn die Steuereinrichtung dazu ausgelegt ist, mehre Fahrzeugfunktionen durchzuführen, dem jeweils zumindest ein für eine Nutzung durch mehrere Fahrzeugfunktionen bereitgestellter Subdienst zugeordnet ist. Auf Grundlage dieses Subdienstes wird die jeweilige Fahrzeugfunktion durchgeführt und erfolgt der Datenaustausch zwischen der Steuereinrichtung und der externen Einrichtung selbstständig und unabhängig davon, ob die Fahrzeugfunktion aktuell aktiviert oder deaktiviert ist. Die Steuereinrichtung ist nun dazu ausgelegt, falls die Steuereinrichtung für zumindest eine der Fahrzeugfunktionen ein Deaktivierungssignal empfängt, diese zumindest eine Fahrzeugfunktion zu deaktivieren und zu überprüfen, ob der zumindest eine Subdienst, der der deaktivierten Fahrzeugfunktion zugeordnet ist, zumindest einer anderen Fahrzeugfunktion, die aktuell aktiviert ist, zugeordnet ist. Zudem ist die Steuereinrichtung dazu ausgelegt, falls der zumindest eine Subdienst keiner aktuell aktivierten Fahrzeugfunktionen zugeordnet ist, diesen zumindest einen Subdienst zu deaktivieren und dadurch den durch den zumindest einen Subdienst erfolgten Datenaustausch zwischen der Steuereinrichtung und der externen Einrichtung zu beenden. Die im Zusammenhang mit dem erfindungsgemäßen Verfahren vorgestellten bevorzugten Ausgestaltungen und deren Vorteile gelten entsprechend, soweit anwendbar, für die erfindungsgemäße Steuereinrichtung. Aus diesem Grund sind die entsprechenden Weiterbildungen der erfindungsgemäßen Steuereinrichtung hier nicht noch einmal beschrieben. Die Steuereinrichtung weist außerdem eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Die Erfindung betrifft außerdem ein Kraftfahrzeug mit einer Steuereinrichtung, wie sie oben beschrieben wurde. Diese Steuereinrichtung ist also dazu ausgelegt, das oben beschriebene erfindungsgemäße Verfahren durchzuführen. Die im Zusammenhang mit dem erfindungsgemäßen Verfahren sowie der erfindungsgemäßen Steuereinrichtung für ein Kraftfahrzeug vorgestellten bevorzugten Ausgestaltungen und deren Vorteile gelten entsprechend, soweit anwendbar, für das erfindungsgemäße Kraftfahrzeug. Aus diesem Grund sind die entsprechenden Weiterbildungen des erfindungsgemäßen Kraftfahrzeugs hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung eines Kraftfahrzeugs mit einer Steuereinrichtung, das einen Datenaustausch mit einer externen Einrichtung ermöglicht,
- Fig. 2: in schematischer Darstellung einen Signalflussgraphen für ein Verfahren zum Aktivieren einer Fahrzeugfunktion eines Kraftfahrzeugs, und
- Fig. 3: in schematischer Darstellung einen Signalflussgraphen für ein Verfahren zum Deaktivieren einer Fahrzeugfunktion eines Kraftfahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden.

Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

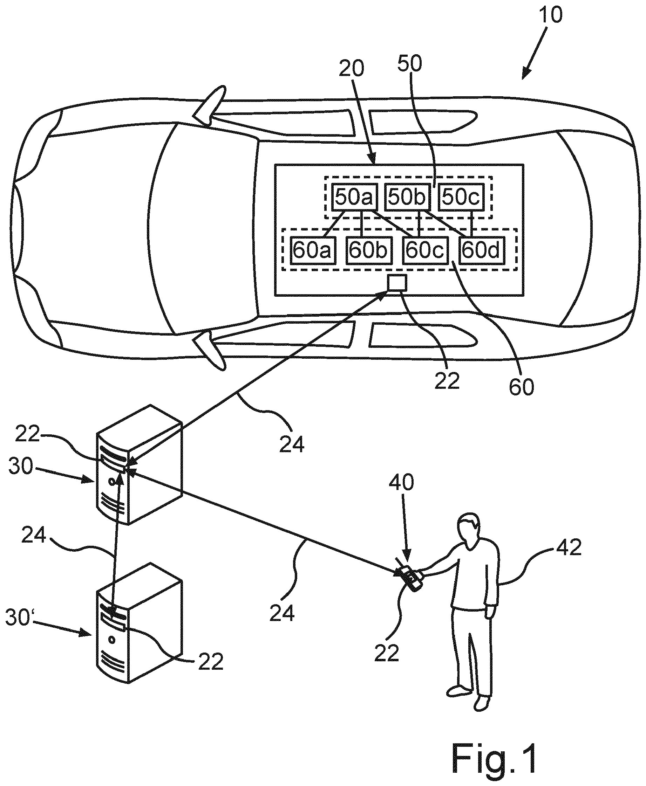

In Fig. 1 ist ein Kraftfahrzeug 10 skizziert, das eine Steuereinrichtung 20 umfasst. Diese Steuereinrichtung 20 umfasst eine Kommunikationsschnittstelle 22, über die eine Kommunikationsverbindung 24 mit der Kommunikationsschnittstelle 22 einer externen Einrichtung 30, bei der es sich in diesem Beispiel um eine Servereinrichtung handelt, aufgebaut wird. Das Kraftfahrzeug 10 weist mehrere Fahrzeugfunktionen 50 auf, die als Fahrzeugfunktionen 50a bis 50c unterschieden werden, Die Fahrzeugfunktionen 50a bis 50c sind jeweils dazu ausgelegt, aus der Ferne angesteuert zu werden. Die hier exemplarisch dargestellten Fahrzeugfunktionen 50a bis 50c umfassen zum einen eine Türschlossansteuerfunktion 50a, eine Statusreportfunktion 50b sowie eine Fahrzeugfinderfunktion 50c. Die Steuereinrichtung 20 ist nun dazu ausgelegt, diese einzelnen Fahrzeugfunktionen 50a bis 50c durchzuführen, wobei diese über die externe Einrichtung 30 ferngesteuert aktivier- oder deaktivierbar sind. Alternativ oder zusätzlich zu den in diesem Beispiel beschriebenen fernsteuerbaren Fahrzeugfunktionen 50 kann zumindest eine im Kraftfahrzeug 10 zu aktivierende oder zu deaktivierende Fahrzeugfunktion 50 vorgesehen sein. Hierbei kann es sich zum Beispiel um eine Wettervorhersageanzeigefunktion, eine Verkehrsflussanzeigefunktion oder eine Nachrichtenanzeigefunktion zum Anzeigen aktueller Nachrichtenmeldungen handeln.

Des Weiteren weist das Kraftfahrzeug 10 mehrere Subdienste 60 auf, die als Subdienste 60a bis 60d unterschieden werden. Hier exemplarisch dargestellt sind ein Türstatusmelder 60a, ein Kommunikationssicherheitsdienst 60b, ein Auftragsanfragedienst 60c sowie ein Statusdatenübertragungsdienst 60d. Jeder der fernsteuerbaren Fahrzeugfunktionen 50a bis 50c ist nun zumindest einem für eine Nutzung durch mehrere Fahrzeugfunktionen 50a bis 50c bereitgestellten Subdienst 60a bis 60d zugeordnet, auf dessen Grundlage die jeweilige Fahrzeugfunktion 50a bis 50c durchgeführt wird. Durch diesen Subdienst 60a bis 60d wird außerdem ein Datenaustausch über die Kommunikationsverbindung 24 zwischen der Steuereinrichtung 20 und der externen Einrichtung 30 selbstständig und unabhängig davon durchgeführt, ob die Fahrzeugfunktion 50a bis 50c aktuell aktiviert oder deaktiviert ist.

Eine Aktivierung sowie eine Deaktivierung von einzelnen Fahrzeugfunktionen 50a bis 50c erfolgt hierbei auf Anfrage eines Benutzers 42. Dieser kann eine entsprechende Eingabe auf einem mobilen Endgerät 40 tätigen, die daraufhin über die Kommunikationsschnittstelle 22 des mobilen Endgeräts 40 über die Kommunikationsverbindung 24 an die Kommunikationsschnittstelle 22 der externen Einrichtung 30 übermittelt wird. Sobald der externen Einrichtung 30 eine derartige Anfrage vom Benutzer 42 vorliegt, informiert diese die Steuereinrichtung 20 des Kraftfahrzeugs 10 darüber, dass eventuell ein Auftrag für eine der Fahrzeugfunktionen 50a bis 50c vorliegt. Die Steuereinrichtung 20 veranlasst daraufhin eine Auftragsanfrage, die diese an die externe Einrichtung 30 übermittelt. Daraufhin wird ein entsprechendes Aktivierungs- oder Deaktivierungssignal, das auf die Eingabe des Benutzers 42 zurückzuführen ist, von der externen Einrichtung 30 an die Steuereinrichtung 20 übermittelt. Gemäß dem Aktivierungssignal wird nun beispielsweise die Türschlossansteuerfunktion 50a aktiviert.

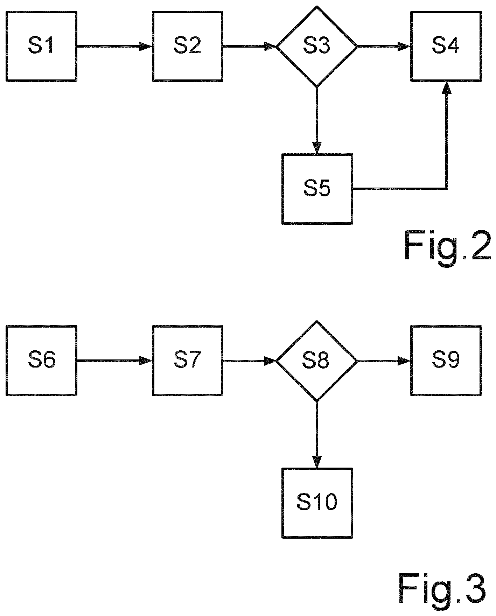

Die einzelnen Verfahrensschritte im Falle einer Aktivierung der Fahrzeugfunktion 50a sind in Fig. 2 skizziert. In diesem Beispiel sind außerdem die Statusreportfunktion 50b sowie die Fahrzeugfinderfunktion 50c bereits aktiviert. Die entsprechenden Subdienste 60c und 60d sind somit ebenfalls bereits in einem aktiven Betriebszustand. Nun empfängt zunächst die Steuereinrichtung 20 für die Fahrzeugfunktion 50a das Aktivierungssignal. Dies erfolgt im Schritt S1. Die Steuereinrichtung 20 aktiviert daraufhin im Verfahrensschritt S2 die Türschlossansteuerfunktion 50a. In einem nächsten Schritt S3 wird überprüft, ob einer der Subdienste 60a bis 60d, der der Türschlossansteuerfunktion 50a zugeordnet ist, bereits aktiviert ist. In diesem Beispiel ist der Auftragsanfragedienst 60c aufgrund des aktivierten Zustands der Statusreportfunktion 50b bereits aktiviert. Der Türstatusmelder 60a sowie der Kommunikationssicherheitsdienst 60b sind jedoch noch deaktiviert. Der Statusübertragungsdienst 60d ist der Türschlossansteuerfunktion 50a nicht zugeordnet und wird daher bei den folgenden Schritten nicht berücksichtigt.

Falls zumindest einer der der Türschlossansteuerfunktion 50a zugeordneten Subdienste 60a bis 60c aktuell deaktiviert ist, wird in Schritt S5 dieser Subdienst 60a bis 60c aktiviert und dadurch der durch diesen Subdienst 60a bis 60c erfolgte Datenaustausch zwischen der Steuereinrichtung 20 und der externen Einrichtung 30 gestartet. In Schritt S5 werden daher der Türstatusmelder 60a sowie der Kommunikationssicherheitsdienst 60b aktiviert. In Schritt S4 sind dann alle der Türschlossansteuerfunktion 50a zugeordneten Subdienste 60a bis 60c aktiviert.

In Fig. 3 ist schematisch dargestellt, welche Schritte S6 bis S10 durchgeführt werden, falls ein Deaktivierungssignal an die Steuereinrichtung 20 übermittelt wird. In diesem Beispiel sind zu Beginn die Türschlossansteuerfunktion 50a, die Statusreportfunktion 50b und die Fahrzeugfinderfunktion 50c aktiviert. Zunächst wird hier für zumindest eine der aktivierten Fahrzeugfunktionen 50b oder 50c das Deaktivierungssignal im Schritt S6 empfangen. Beispielsweise handelt es sich hierbei um ein Deaktivierungssignal für die Statusreportfunktion 50b, mit der beispielsweise zuvor der Benutzer 42 angefragt hat, wie der Ladezustand einer Hochvoltbatterie des Kraftfahrzeugs 10 aktuell zu beziffern ist. Nun hat der Benutzer 42 diese Abfrage beendet und wünscht keine weiteren Statusdaten vom Kraftfahrzeug 10, weshalb das Deaktivierungssignal im Schritt S6 übermittelt wird. Die Statusreportfunktion 50b erhält hierbei die entsprechenden Signale aufgrund der Aktivität der Auftragsanfragedienst 60c, über die zuvor die Ladezustandsanfrage vom Benutzer 42 von der externen Einrichtung 30 angefragt wurde. Im nächsten Schritt S7 deaktiviert die Steuereinrichtung 20 die Statusreportfunktion 50b. Im folgenden Schritt S3 überprüft daraufhin die Steuereinrichtung 20, ob zumindest einer der Subdienste 60c und/oder 60d, der der Statusreportfunktion 50b zugeordnet ist, zumindest einer anderen Fahrzeugfunktion 50a oder 50c zugeordnet ist, die aktuell aktiviert ist. In diesem Beispiel ist dies der Fall für den Auftragsanfragedienst 60c, derbweiterhin von der Türschlossansteuerfunktion 50a benötigt wird, sowie für den Statusdatenübertragungsdienst 60d, der weiterhin von der Fahrzeugfinderfunktion 50c benötigt wird. Da beide Subdienste 60c und 60d der Statusreportfunktion 50b weiterhin von zumindest einer weiteren Fahrzeugfunktion 50a bis 50c benötigt werden, bleiben beide Subdienste 60c und 60d weiterhin aktiv, was im Schritt S9 erfolgt.

Wird nun zusätzlich zur Deaktivierung der Statusreportfunktion 50b noch die Fahrzeugfinderfunktion 50c deaktiviert, da im Verfahrensschritt S6 ein entsprechendes Deaktivierungssignal empfangen und daraufhin die Steuereinrichtung 20 die Fahrzeugfinderfunktion 50c deaktiviert hat, wird im Überprüfungsschritt S8 festgestellt, dass nun der Statusdatenübertragungsdienst 60d von keiner aktuell aktivierten Fahrzeugfunktion 50a bis 50c weiterhin benötigt wird, da dieser Subdienst 60d keiner weiterhin aktivierten Fahrzeugfunktion 50a bis 50c zugeordnet ist. Daraufhin wird in einem Schritt S10 der Statusdatenübertragungsdienst 60c von der Steuereinrichtung 20 beendet und dadurch der durch den Statusdatenübertragungsdienst 60d erfolgte Datenaustausch, das heißt in diesem Fall die Ermittlung und Übertragung des aktuellen Ladezustands der Batterie des Kraftfahrzeugs 10 sowie der aktuellen Fahrzeugstandposition von der Steuereinrichtung 20 an die externe Einrichtung 30, unterbunden. Auch in diesem Beispiel bleibt jedoch der Auftragsanfragedienst 60c weiterhin aktiv, da diesem die in diesem Beispiel weiterhin aktive Türschlossansteuerfunktion 50a zugeordnet ist und von dieser weiterhin benötigt wird.

In Fig. 1 ist außerdem eine weitere externe Einrichtung 30' skizziert, die ebenfalls die Kommunikationsschnittstelle 22 aufweist und dazu ausgelegt ist, die Kommunikationsverbindung 24 mit der Kommunikationsschnittstelle 22 der externen Einrichtung 30 aufzubauen. Das Deaktivierungs- und/oder das Aktivierungssignal für eine der Fahrzeugfunktion 50a bis 50c kann entweder von der externen Einrichtung 30 selbst oder von der weiteren externen Einrichtung 30' erzeugt werden. Falls das Deaktivierungs- und/oder das Aktivierungssignal von der weiteren externen Einrichtung 30' erzeugt wird, kann dieses über die externe Einrichtung 30 an die Steuereinrichtung 20 übermittelt werden. Hierbei ist bevorzugt der Datenaustausch erst dann möglich, wenn eine entsprechende Freigabe des Benutzers 42 des Kraftfahrzeugs 10 vorliegt. Hierdurch ist es beispielsweise möglich, dass zur Untersuchung der Auslastung von einzelnen Stellplätzen eines Parkhauses die Fahrzeugpositionsdaten des Kraftfahrzeugs 10 von der weiteren externen Einrichtung 30' angefragt werden können.

In der Steuereinrichtung 20 ist eine Verknüpfung zwischen jeder Fahrzeugfunktion 50a bis 50c mit dem jeweiligen zumindest einen Subdienst 60a bis 60d hinterlegt. Die Steuereinrichtung 20 überprüft daraufhin in den Überprüfungsschritten S3 und S8, die in den Fig. 2 und 3 dargestellt sind, auf Basis der hinterlegten Verknüpfungen, ob der zumindest eine Subdienst 60a bis 60d, der der deaktivierten oder der aktivierten Fahrzeugfunktion 50a bis 50c zugeordnet ist, zumindest einer anderen Fahrzeugfunktion 50a bis 50c, die aktuell aktiviert ist, zugeordnet ist, beziehungsweise, ob der zumindest eine der Fahrzeugfunktion 50a bis 50c zugeordnete Subdienst 60a bis 60d bereits aktiviert ist.

Der Benutzer 42 kann sich die im Kraftfahrzeug 10 hinterlegten Verknüpfungen zwischen jeder Fahrzeugfunktion 50a bis 50c mit dem jeweiligen zumindest einen Subdienst 60a bis 60d auf einer dazu ausgelegten Anzeigeeinrichtung des Kraftfahrzeugs 10 und/oder auf dem mobilen Endgerät 40 anzeigen lassen, wenn er dies in einer entsprechenden Anfrage an die Steuereinrichtung 20 anfragt. Die Subdienste 60a bis 60d selbst beschaffen jeweils Statusdaten des Kraftfahrzeugs 10 und/oder der Kommunikationsverbindung 24 zwischen der Steuereinrichtung 20 des Kraftfahrzeugs 10 und der externen Einrichtung 30, speichern diese zumindest für eine vorgegebene Zeitdauer und senden sie an die externe Einrichtung 30 aus.

Zusätzlich zu den hier exemplarisch genannten Fahrzeugfunktionen 50a bis 50c sowie Subdiensten 60a bis 60d sind zahlreiche weitere Fahrzeugfunktionen 50 sowie Subdienste 60 möglich. Welche Fahrzeugfunktion 50 sowie welche zugehörigen Subdienste 60 im Kraftfahrzeug 10 im Detail hinterlegt sind, kann beispielsweise mittels einer Serviceliste im Kraftfahrzeug 10 hinterlegt sein, der all die Fahrzeugfunktionen 50 zu entnehmen sind, die der Benutzer 42 für das Kraftfahrzeug 10 gebucht hat beziehungsweise die ihm von dem Kraftfahrzeug 10 bereitgestellt werden.

Eine Einrichtung zur Deaktivierung und/oder Aktivierung einer Fahrzeugfunktion 50 kann, wie oben beschrieben im mobilen Endgerät 40, aber auch in einem externen Frontend, wie zum Beispiel einem Webportal, oder im Kraftfahrzeug 10 selbst verortet sein. Eine Deaktivierung aller nutzbaren Fahrzeugfunktionen 50 hat zur Folge, dass auch alle Subdienste 60 deaktiviert werden. Hierzu gehört unter anderem der Subdienst 60, der die grundlegende Datenverbindung aufbaut. Ist diese erst mal deaktiviert, besteht kein Zugriff mehr von außerhalb des Kraftfahrzeugs 10, das heißt es ist nur im Kraftfahrzeug 10 selbst möglich, eine Reaktivierung dieses Subdienstes 60 durchzuführen. Es ist daher möglich, dass die Deaktivierung und/oder Aktivierung von Fahrzeugfunktionen 50 im Kraftfahrzeug 10 ebenfalls möglich ist, wodurch die Subdienste 60 wie beschrieben deaktiviert und/oder aktiviert werden. Es ist außerdem zu beachten, dass es insgesamt zahlreiche Fahrzeugfunktionen 50 im Kraftfahrzeug 10 gibt. Eine Teilmenge davon wird intern im Kraftfahrzeug 10 genutzt, eine andere Teilmenge davon wird jedoch extern, beispielsweise auf dem mobilen Endgerät 40 zur Fernsteuerung von Fahrzeugfunktionen, genutzt. Alle Fahrzeugfunktionen 50, das heißt sowohl die internen als auch die externen, weisen jedoch Subdienste 60 zum Datenaustausch mit der externen Einrichtung 30 auf, und zwar teilweise sogar dieselben Subdienste 60.

Insgesamt zeigen die Beispiele, wie eine logische Aktivierung und Deaktivierung von Diensten, den Fahrzeugfunktionen 50a bis 50c, zur Wahrung datenschutzrechtlicher Bestimmungen im Kraftfahrzeug 10 implementiert werden kann, wobei hierbei der Augenmerk auf die Subdienste 60a bis 60d gelegt wird, die gegebenenfalls trotz auf Kundenwunsch initiierter Deaktivierung der Fahrzeugfunktion 50a bis 50c üblicherweise in herkömmlichen Kraftfahrzeugen 10 weiterhin aktiviert sind. Hierfür erfolgt eine Verknüpfung aller Fahrzeugfunktionen 50a bis 50c untereinander, wobei hierbei eine Vererbung von Eigenschaften und/oder Rechtsgrundlagen gegeben ist. In diesem Zusammenhang bekommt jede Fahrzeugfunktion 50a bis 50c, die oftmals auch als Onlinedienst oder Master bezeichnet wird, eine Menge unterstützender Onlinedienste, die sogenannten Subdienste 60a bis 60d, die auch als Slaves bezeichnet werden können, zugewiesen.

Des Weiteren zeigen die Beispiele einen Algorithmus zur Entscheidung, welche Subdienste 60a bis 60d aktiv bleiben dürfen beziehungsweise müssen und welche nicht. Wird eine Fahrzeugfunktion 50a bis 50c deaktiviert, ist auch jeder Subdienst 60a bis 60d zu deaktivieren, es sei denn, dieser Subdienst 60a bis 60d ist einer weiteren, nicht deaktivierten Fahrzeugfunktion 50a bis 50c zugeordnet. Wird eine Fahrzeugfunktion 50a bis 50c jedoch aktiviert, sind auch alle zugewiesenen Subdienste 60a bis 60d zu aktivieren, um die Funktion der Fahrzeugfunktion 50a bis 50c sicherzustellen. Die Rechtsgrundlage für die Aktivierung der Fahrzeugfunktion 50a bis 50c ist in der Regel ein Kundenwunsch des Benutzers 42 zur Bereitstellung der Fahrzeugfunktion 50a bis 50c beziehungsweise seine Einwilligung zur Datenerhebung. Diese Datenerhebung kann beispielsweise durch die weitere externe Einrichtung 30' erfolgen. Diese Rechtsgrundlage besteht auch für die Subdienste 60a bis 60d, die für die vollumfängliche Funktion der gewünschten Fahrzeugfunktionen 50a bis 50c erforderlich sind, wodurch die Vererbung der Rechtsgrundlage zulässig ist.

Mit der Darstellung der Verknüpfung der Fahrzeugfunktion 50a bis 50c mit den Subdiensten 60a bis 60d kann dem Benutzer 42 auch eine optimal transparente Verkettung zwischen Fahrzeugfunktion 50a bis 50c und Subdiensten 60a bis 60d dargestellt werden. Unterstützende Fahrzeugfunktionen 50a bis 50c können in dieser Ausführung auch mit Berechtigungen oder Zugriffen jeglicher Art gleichgesetzt werden. Die Subdienste 60a bis 60d zeichnen sich hierbei dadurch aus, dass diese Daten basierend auf der Rechtsgrundlage der übergeordneten Fahrzeugfunktion 50a bis 50c erheben, da diese Daten für die vollumfängliche Funktion der übergeordneten Fahrzeugfunktion 50a bis 50c benötigt werden.

## Patentansprüche

1. Verfahren zum Kontrollieren eines Datenaustauschs zwischen einer Steuereinrichtung (20) eines Kraftfahrzeugs (10) und einer externen Einrichtung (30), wobei mittels der Steuereinrichtung (20) mehrere Fahrzeugfunktionen (50) durchgeführt werden, denen jeweils zumindest ein für eine Nutzung durch mehrere Fahrzeugfunktionen (50) bereitgestellter Subdienst (60) zugeordnet ist, auf dessen Grundlage die jeweilige Fahrzeugfunktion (50) durchgeführt wird;
**dadurch gekennzeichnet, dass**
durch den zumindest einen Subdienst (60) der Datenaustausch zwischen der Steuereinrichtung (20) und der externen Einrichtung (30) selbständig und unabhängig davon erfolgt, ob die Fahrzeugfunktion (50) aktuell aktiviert oder deaktiviert ist, wobei es aufgrund des aktivierten Subdienstes (6) sogar dann, wenn die Fahrzeugfunktion (50) momentan nicht angesteuert wird, zu einer entsprechenden Datenerhebung sowie einer Datenübermittlung von der Steuereinrichtung (20) des Kraftfahrzeugs (10) an die externe Einrichtung (30) kommt, umfassend die Schritte:
- falls die Steuereinrichtung (20) für zumindest eine der Fahrzeugfunktionen (50) ein Deaktivierungssignal empfängt (S6), deaktiviert die Steuereinrichtung (20) diese zumindest eine Fahrzeugfunktion (50) (S7) und überprüft, ob der zumindest eine Subdienst (60), der der deaktivierten Fahrzeugfunktion (50) zugeordnet ist, zumindest einer anderen Fahrzeugfunktion (50), die aktuell aktiviert ist, zugeordnet ist (S8); und
- falls der zumindest eine Subdienst (60) keiner aktuell aktivierten Fahrzeugfunktion (50) zugeordnet ist, deaktiviert die Steuereinrichtung (20) diesen zumindest einen Subdienst (60) und beendet dadurch den durch den zumindest einen Subdienst (60) erfolgten Datenaustausch zwischen der Steuereinrichtung (20) und der externen Einrichtung (30) (S10);
wobei in der Steuereinrichtung (20) eine Verknüpfung zwischen jeder Fahrzeugfunktion (50) mit dem jeweiligen zumindest einen Subdienst (60) hinterlegt ist und die Steuereinrichtung (20) auf Basis der hinterlegten Verknüpfung überprüft, ob der zumindest eine Subdienst (60), der der deaktivierten Fahrzeugfunktion (50) zugeordnet ist, zumindest einer anderen Fahrzeugfunktion (50), die aktuell aktiviert ist, zugeordnet ist.

2. Verfahren nach dem vorhergehenden Anspruch, wobei falls die Steuereinrichtung (20) für zumindest eine der Fahrzeugfunktionen (50) ein Aktivierungssignal empfängt (S1), die Steuereinrichtung (20) diese zumindest eine Fahrzeugfunktion (50) aktiviert (S2) und überprüft, ob der zumindest eine der Fahrzeugfunktion (50) zugeordnete Subdienst (60) bereits aktiviert ist (S3), wobei falls der zumindest eine der aktivierten Fahrzeugfunktion (50) zugeordnete Subdienst (60) aktuell deaktiviert ist, dieser zumindest eine Subdienst (60) aktiviert und dadurch der durch den zumindest einen Subdienst (60) erfolgte Datenaustausch zwischen der Steuereinrichtung (20) und der externen Einrichtung (30) gestartet wird (S5, S4).

3. Verfahren nach dem vorhergehenden Anspruch, wobei das Deaktivierungssignal und/oder das Aktivierungssignal für die zumindest eine Fahrzeugfunktion (50) durch eine Eingabe eines Benutzers (42) des Kraftfahrzeugs (10) auf einer Bedieneinrichtung im Kraftfahrzeug (10) erzeugt und fahrzeugintern an die Steuereinrichtung (20) übermittelt wird und/oder durch eine Eingabe des Benutzers (41) auf einem mobilen Endgerät (40) erzeugt und über die externe Einrichtung (30) an die Steuereinrichtung (20) des Kraftfahrzeugs (10) übermittelt wird.

4. Verfahren nach dem vorhergehenden Anspruch, wobei der Steuereinrichtung (20) die Eingabe des Benutzers (42) auf dem mobilen Endgerät (40), die an die externe Einrichtung (30) übermittelt wird, nur auf Anfrage bei der externen Einrichtung (40) übermittelt wird.

5. Verfahren nach einem der Ansprüche 2 bis 4, wobei das Deaktivierungssignal und/oder das Aktivierungssignal für die zumindest eine Fahrzeugfunktion (50) von der externen Einrichtung (30) oder einer weiteren externen Einrichtung (30'), insbesondere unter Berücksichtigung einer entsprechenden Freigabe des Benutzers (42) des Kraftfahrzeugs (10), erzeugt wird und über die externe Einrichtung (30) an die Steuereinrichtung (20) übermittelt wird.

6. Verfahren nach einem der vorhergehenden Ansprüche, wobei die Steuereinrichtung (20) auf Basis der hinterlegten Verknüpfung überprüft, ob der zumindest eine der Fahrzeugfunktion (50) zugeordnete Subdienst (60) bereits aktiviert ist.

7. Verfahren nach einem der vorhergehenden Ansprüche, wobei dem Benutzer (42) des Kraftfahrzeugs (10) die hinterlegte Verknüpfung zwischen jeder Fahrzeugfunktion (50) mit dem jeweiligen zumindest einen Subdienst (60) auf einer Anzeigeeinrichtung des Kraftfahrzeugs (10) und/oder dem mobilen Endgerät (40) des Benutzers (42) auf eine entsprechende Anfrage des Benutzers (42) hin angezeigt wird.

8. Verfahren nach einem der vorhergehenden Ansprüche, wobei der Subdienst (60) jeweils Statusdaten des Kraftfahrzeugs (10) und/oder einer Kommunikationsverbindung (24) zwischen der Steuereinrichtung (20) des Kraftfahrzeugs (10) und der externen Einrichtung (30) beschafft, zumindest für eine vorgegebene Zeitdauer speichert und an die externe Einrichtung (30) aussendet.

9. Steuereinrichtung (20) für ein Kraftfahrzeug (10), die dazu ausgelegt ist, einen Datenaustausch zwischen der Steuereinrichtung (20) und einer externen Einrichtung (30) zu kontrollieren, indem die Steuereinrichtung (20) dazu ausgelegt ist, mehrere Fahrzeugfunktionen (50) durchzuführen, denen jeweils zumindest ein für eine Nutzung durch mehrere Fahrzeugfunktionen (50) bereitgestellter Subdienst (60) zugeordnet ist, auf dessen Grundlage die jeweilige Fahrzeugfunktion (50) durchgeführt wird;
**dadurch gekennzeichnet, dass**
die Steuereinrichtung (20) dazu ausgelegt ist, dass durch den zumindest einen Subdienst (60) der Datenaustausch zwischen der Steuereinrichtung (20) und der externen Einrichtung (30) selbständig und unabhängig davon erfolgt, ob die Fahrzeugfunktion (50) aktuell aktiviert oder deaktiviert ist, wobei die Steuereinrichtung (20) dazu ausgelegt ist, dass es aufgrund des aktivierten Subdienstes (6) sogar dann, wenn die Fahrzeugfunktion (50) momentan nicht angesteuert wird, zu einer entsprechenden Datenerhebung sowie einer Datenübermittlung von der Steuereinrichtung (20) des Kraftfahrzeugs (10) an die externe Einrichtung (30) kommt, wobei die Steuereinrichtung (20) dazu ausgelegt ist,
- falls die Steuereinrichtung (20) für zumindest eine der Fahrzeugfunktionen (50) ein Deaktivierungssignal empfängt, diese zumindest eine Fahrzeugfunktion (50) zu deaktivieren und zu überprüfen, ob der zumindest eine Subdienst (60), der der deaktivierten Fahrzeugfunktion (50) zugeordnet ist, zumindest einer anderen Fahrzeugfunktion (50), die aktuell aktiviert ist, zugeordnet ist; und
- falls der zumindest eine Subdienst (60) keiner aktuell aktivierten Fahrzeugfunktion (50) zugeordnet ist, diesen zumindest einen Subdienst (60) zu deaktivieren und dadurch den durch den zumindest einen Subdienst (60) erfolgten Datenaustausch zwischen der Steuereinrichtung (20) und der externen Einrichtung (30) zu beenden;
wobei die Steuereinrichtung (20) derart ausgelegt ist, dass in der Steuereinrichtung (20) eine Verknüpfung zwischen jeder Fahrzeugfunktion (50) mit dem jeweiligen zumindest einen Subdienst (60) hinterlegt ist, und die Steuereinrichtung (20) dazu ausgelegt ist, auf Basis der hinterlegten Verknüpfung zu überprüfen, ob der zumindest eine Subdienst (60), der der deaktivierten Fahrzeugfunktion (50) zugeordnet ist, zumindest einer anderen Fahrzeugfunktion (50), die aktuell aktiviert ist, zugeordnet ist.

10. Kraftfahrzeug (10) mit einer Steuereinrichtung (20) nach dem vorhergehenden Anspruch.

## Claims

1. Method for controlling a data interchange between a control apparatus (20) of a motor vehicle (10) and an external apparatus (30), wherein the control apparatus (20) is used to perform a plurality of vehicle functions (50) with each of which is associated at least one subservice (60) which is provided for use by a plurality of vehicle functions (50) and on the basis of which the respective vehicle function (50) is performed;
**characterised in that**
by means of the at least one subservice (60), the data interchange between the control apparatus (20) and the external apparatus (30) is effected independently and irrespective of whether the vehicle function (50) is currently activated or deactivated, wherein, due to the activated subservice (6), even if the vehicle function (50) is not currently being controlled, a corresponding data collection as well as a data transmission from the control apparatus (20) of the motor vehicle (10) to the external apparatus (30) occurs, comprising the steps:
- if the control apparatus (20) receives a deactivation signal for at least one of the vehicle functions (50) (S6), the control apparatus (20) deactivates this at least one vehicle function (50) (S7) and checks whether the at least one subservice (60) associated with the deactivated vehicle function (50) is associated with at least one other vehicle function (50) that is currently activated (S8); and
- if the at least one subservice (60) is not associated with a currently activated vehicle function (50), the control apparatus (20) deactivates this at least one subservice (60) and thereby terminates the data interchange effected by means of the at least one subservice (60) between the control apparatus (20) and the external device (30) (S10);
wherein a link between each vehicle function (50) with the respective at least one subservice (60) is stored in the control apparatus (20) and the control apparatus (20) checks, on the basis of the stored link, whether the at least one subservice (60) associated with the deactivated vehicle function (50) is associated with at least one other vehicle function (50) which is currently activated.

2. Method according to the preceding claim, wherein if the control apparatus (20) receives an activation signal for at least one of the vehicle functions (50) (S1), the control apparatus (20) activates this at least one vehicle function (50) (S2) and checks whether the at least one subservice (60) associated with the vehicle function (50) is already activated (S3), wherein if the at least one subservice (60) associated with the activated vehicle function (50) is currently deactivated, this at least one subservice (60) is activated and thereby the data interchange effected by means of the at least one subservice (60) between the control apparatus (20) and the external apparatus (30) is started (S5, S4).

3. Method according to the preceding claim, wherein the deactivation signal and/or the activation signal for the at least one vehicle function (50) is generated by an input of a user (42) of the motor vehicle (10) on an operating apparatus in the motor vehicle (10) and is transmitted in-vehicle to the control apparatus (20) and/or is generated by an input by the user (41) on a mobile terminal (40) and is transmitted via the external apparatus (30) to the control apparatus (20) of the motor vehicle (10).

4. Method according to the preceding claim, wherein the input by the user (42) on the mobile terminal (40), which input is transmitted to the external apparatus (30), is transmitted to the control apparatus (20) only upon request to the external apparatus (40).

5. Method according to any of claims 2 to 4, wherein the deactivation signal and/or the activation signal for the at least one vehicle function (50) is generated by the external apparatus (30) or a further external apparatus (30'), in particular taking into account a corresponding authorisation by the user (42) of the motor vehicle (10), and is transmitted to the control apparatus (20) via the external apparatus (30).

6. Method according to any of the preceding claims, wherein the control apparatus (20) checks, on the basis of the stored link, whether the at least one subservice (60) associated with the vehicle function (50) is already activated.

7. Method according to any of the preceding claims, wherein the stored link between each vehicle function (50) with the respective at least one subservice (60) is displayed to the user (42) of the motor vehicle (10) on a display apparatus of the motor vehicle (10) and/or the mobile terminal (40) of the user (42) in response to a corresponding request by the user (42).

8. Method according to any of the preceding claims, wherein the subservice (60) in each case obtains status data of the motor vehicle (10) and/or of a communication connection (24) between the control apparatus (20) of the motor vehicle (10) and the external apparatus (30), stores them at least for a predetermined time period and sends them to the external apparatus (30).

9. Control apparatus (20) for a motor vehicle (10), which control apparatus is designed to control a data interchange between the control apparatus (20) and an external apparatus (30), in that the control apparatus (20) is designed to perform a plurality of vehicle functions (50) with each of which is associated at least one subservice (60) which is provided for use by a plurality of vehicle functions (50) and on the basis of which the respective vehicle function (50) is performed;
**characterised in that**
the control apparatus (20) is designed such that, by means of the at least one subservice (60), the data interchange between the control apparatus (20) and the external apparatus (30) is effected independently and irrespective of whether the vehicle function (50) is currently activated or deactivated, wherein the control apparatus (20) is designed such that, due to the activated subservice (6), even if the vehicle function (50) is not currently being controlled, a corresponding data collection as well as a data transmission from the control apparatus (20) of the motor vehicle (10) to the external apparatus (30) occurs, wherein the control apparatus (20) is designed,
- if the control apparatus (20) receives a deactivation signal for at least one of the vehicle functions (50), to deactivate this at least one vehicle function (50) and to check whether the at least one subservice (60) associated with the deactivated vehicle function (50) is associated with at least one other vehicle function (50) that is currently activated; and
- if the at least one subservice (60) is not associated with a currently activated vehicle function (50), to deactivate this at least one subservice (60) and thereby terminate the data interchange effected by means of the at least one subservice (60) between the control apparatus (20) and the external device (30);
wherein the control apparatus (20) is designed such that a link between each vehicle function (50) with the respective at least one subservice (60) is stored in the control apparatus (20), and the control apparatus (20) is designed to check, on the basis of the stored link, whether the at least one subservice (60) associated with the deactivated vehicle function (50) is associated with at least one other vehicle function (50) which is currently activated.

10. Motor vehicle (10) having a control apparatus (20) according to the preceding claim.

## Revendications

1. Procédé pour contrôler un échange de données entre un dispositif de commande (20) d'un véhicule automobile (10) et un dispositif externe (30), dans lequel plusieurs fonctions de véhicule automobile (50) sont exécutées au moyen du dispositif de commande (20), auxquelles est respectivement affecté au moins un sous-service (60) prévu pour une utilisation par plusieurs fonctions de véhicule automobile (50), sur la base duquel la fonction de véhicule automobile respective (50) est exécutée ;
**caractérisé en ce que**
l'échange de données entre le dispositif de commande (20) et le dispositif externe (30) s'effectue par le biais de l'au moins un sous-service (60), de manière autonome et indépendamment du fait que la fonction de véhicule automobile (50) soit alors activée ou désactivée, dans lequel une collecte de données correspondante ainsi qu'une transmission de données du dispositif de commande (20) du véhicule automobile (10) au dispositif externe (30) s'effectue sur la base du sous-service activé (6), même si la fonction de véhicule automobile (50) n'est alors pas activée, comprenant les étapes consistant à :
- si le dispositif de commande (20) reçoit (S6) un signal de désactivation pour au moins une des fonctions de véhicule automobile (50), le dispositif de commande (20) désactive (S7) cette au moins une fonction de véhicule automobile (50) et vérifie si l'au moins un sous-service (60) qui est affecté à la fonction de véhicule automobile désactivée (50) est affecté (S8) à au moins une autre fonction de véhicule automobile (50) qui est alors activée ; et
- si l'au moins un sous-service (60) n'est pas affecté à une fonction de véhicule automobile (50) alors activée, le dispositif de commande (20) désactive cet au moins un sous-service (60) et termine ainsi l'échange de données entre le dispositif de commande (20) et le dispositif externe (30) (S10) qui s'est effectué par le biais de l'au moins un sous-service (60) ;
dans lequel un lien entre chaque fonction de véhicule automobile (50) et l'au moins un sous-service respectif (60) est enregistré dans le dispositif de commande (20) et le dispositif de commande (20) vérifie, sur la base du lien enregistré, si l'au moins un sous-service (60) qui est affecté à la fonction de véhicule automobile désactivée (50) est affecté à au moins une autre fonction de véhicule automobile (50) qui est alors activée.

2. Procédé selon la revendication précédente, dans lequel si le dispositif de commande (20) reçoit (S1) un signal d'activation pour au moins une des fonctions de véhicule automobile (50), le dispositif de commande (20) active (S2) cette au moins une fonction de véhicule automobile (50) et vérifie si l'au moins un sous-service (60) affecté à la fonction de véhicule automobile (50) est déjà activé (S3), dans lequel, si l'au moins un sous-service (60) affecté à la fonction de véhicule automobile activée (50) est alors désactivé, cet au moins un sous-service (60) est activé et l'échange de données entre le dispositif de commande (20) et le dispositif externe (30) effectué par le biais de l'au moins un sous-service (60) est ainsi lancé (S5, S4).

3. Procédé selon la revendication précédente, dans lequel le signal de désactivation et/ou le signal d'activation pour l'au moins une fonction de véhicule automobile (50) est généré par une entrée d'un utilisateur (42) du véhicule automobile (10) sur un dispositif de commande dans le véhicule automobile (10) et est transmis de manière interne dans le véhicule au dispositif de commande (20) et/ou est généré par le biais d'une entrée de l'utilisateur (41) sur un terminal mobile (40) et est transmis par l'intermédiaire du dispositif externe (30) au dispositif de commande (20) du véhicule automobile (10).

4. Procédé selon la revendication précédente, dans lequel l'entrée de l'utilisateur (42) sur le terminal mobile (40) qui est transmise au dispositif externe (30) est transmise au dispositif de commande (20) uniquement sur demande au niveau du dispositif externe (40).

5. Procédé selon l'une quelconque des revendications 2 à 4, dans lequel le signal de désactivation et/ou le signal d'activation pour l'au moins une fonction de véhicule automobile (50) est généré par le dispositif externe (30) ou un autre dispositif externe (30'), en particulier en tenant compte d'une autorisation correspondante de l'utilisateur (42) du véhicule automobile (10), et est transmis au dispositif de commande (20) par l'intermédiaire du dispositif externe (30).

6. Procédé selon l'une quelconque des revendications précédentes, dans lequel le dispositif de commande (20) vérifie, sur la base du lien enregistré, si l'au moins un sous-service (60) affecté à la fonction de véhicule automobile (50) est déjà activé.

7. Procédé selon l'une quelconque des revendications précédentes, dans lequel le lien enregistré entre chaque fonction de véhicule automobile (50) avec l'au moins un sous-service respectif (60) est affiché à l'utilisateur (42) du véhicule automobile (10) sur un dispositif d'affichage du véhicule automobile (10) et/ou le terminal mobile (40) de l'utilisateur (42) en réponse à une demande correspondante de l'utilisateur (42).

8. Procédé selon l'une quelconque des revendications précédentes, dans lequel le sous-service (60) fournit respectivement des données d'état du véhicule automobile (10) et/ou d'une liaison de communication (24) entre le dispositif de commande (20) du véhicule automobile (10) et le dispositif externe (30), les enregistre au moins pendant une durée prédéterminée et les émet au dispositif externe (30).

9. Dispositif de commande (20) pour un véhicule automobile (10), qui est conçu pour commander un échange de données entre le dispositif de commande (20) et un dispositif externe (30), en ce que le dispositif de commande (20) est conçu pour exécuter plusieurs fonctions de véhicule automobile (50), auxquelles est respectivement affecté au moins un sous-service (60) prévu pour une utilisation par plusieurs fonctions de véhicule automobile (50), sur la base duquel la fonction de véhicule automobile respective (50) est exécutée ;
**caractérisé en ce que**
le dispositif de commande (20) est conçu de sorte que l'échange de données entre le dispositif de commande (20) et le dispositif externe (30) s'effectue par le biais de l'au moins un sous-service (60), de manière autonome et indépendamment du fait que la fonction de véhicule automobile (50) soit alors activée ou désactivée, dans lequel le dispositif de commande (20) est conçu de sorte qu'une collecte de données correspondante ainsi qu'une transmission de données du dispositif de commande (20) du véhicule automobile (10) au dispositif externe (30) s'effectue sur la base du sous-service activé (6), même si la fonction de véhicule automobile (50) n'est alors pas activée, dans lequel le dispositif de commande (20) est conçu pour,
- si le dispositif de commande (20) reçoit un signal de désactivation pour au moins une des fonctions de véhicule automobile (50), désactiver cette au moins une fonction de véhicule automobile (50) et vérifier si l'au moins un sous-service (60) qui est affecté à la fonction de véhicule automobile désactivée (50) est affecté à au moins une autre fonction de véhicule automobile (50) qui est alors activée ; et
- si l'au moins un sous-service (60) n'est pas affecté à une fonction de véhicule automobile (50) alors activée, désactiver cet au moins un sous-service (60) et terminer ainsi l'échange de données entre le dispositif de commande (20) et le dispositif externe (30) qui s'est effectué par le biais de l'au moins un sous-service (60) ;
dans lequel le dispositif de commande (20) est conçu de sorte qu'un lien entre chaque fonction de véhicule automobile (50) et l'au moins un sous-service respectif (60) est enregistré dans le dispositif de commande (20) et le dispositif de commande (20) est conçu pour vérifier, sur la base du lien enregistré, si l'au moins un sous-service (60) qui est affecté à la fonction de véhicule automobile désactivée (50) est affecté à au moins une autre fonction de véhicule automobile (50) qui est alors activée.

10. Véhicule automobile (10) avec un dispositif de commande (20) selon la revendication précédente.
